# EUROPEAN PATENT SPECIFICATION

(11) **EP 2 782 115 B1**
(45) Date of publication and mention of the grant of the patent: **16.03.2016**
(21) Application number: 13382101.7
(22) Date of filing: 21.03.2013
(51) Int. Cl.: H01H 85/25, H02B 1/18

(54) **Fuse block base**
Sicherungsblockbasis
Base de bloc de fusible

(43) Date of publication of application: 24.09.2014
(73) Proprietor: PRONUTEC, S.A.U., 48340 Amorebieta (Vizcaya) (ES)
(72) Inventor: Gomez Barbero, José Julio, 48430 AMOREBIETA (VIZCAYA) (ES)
(74) Representative: Carpintero Lopez, Francisco

(56) References cited:
- EP-A1- 1 045 414
- EP-A1- 2 546 856
- EP-A2- 1 585 156
- DE-U1- 29 906 759

## Description

### Technical Field of the Invention

The invention is comprised within the technical field of electrical installations, more specifically installations referring to electric switchboards, and preferably for use with fuses with blade-type contacts, for direct current applications, preferably applications of photovoltaic systems.

### Background

Safety elements consisting of a fuse block base placed in low-voltage switchboards of the corresponding electrical installation, more specifically fixed or mounted on the busbar of said low-voltage switchboard, are known to be arranged in power distribution systems.

Some types of fuse block bases are known today, such as for example:
1.- One-pole fuse block bases such as the one described in European patent application no. EP-2385540-A2, which have covered electrical contacts, but where the fuse is exposed, with the subsequent fuse protection problems this entails.
2.- Vertical two-pole bases, such as the one described in European patent application no. EP-2365500-A1, which have covered electrical contacts, where the same problems relating to fuse protection as in the case described above occur.

A further fuse block is known from EP-1 045 414-A1.

For the purpose of minimizing the protection problem considered in the preceding cases, usually once a set of fuse block bases has been installed, the bases are covered with a transparent screen that covers the entire set of bases, thus acting as a protective element in response to possible accidental contacts. However in addition to a cost increment, these screens involve a safety problem because if any action needs to be taken on any of the bases, it is necessary to remove the entire screen, whereby exposing all the fuse block bases, including all the others that do not house the fuse on which action must be taken.

For the purpose of solving the problems described in the preceding paragraph, individual protective elements that individually cover each of the fuses were developed. To place each protection, it has to be placed manually once the fuse has been introduced in its position with the lever. The problem that these protective elements have is that they are not necessary for the normal operation of the base once the fuse has been placed in its service position, so the placement of these protections depends on the operator having enough time and on not forgetting to place them after placing each fuse with the lever. In practice, in those cases where there is an assembly with a large number of fuse block bases, it is very difficult for all the individual protective elements to be correctly placed. Furthermore, given their configuration, these protective elements easily fall off when they are located in vibrating areas.

On the other hand, in the case of fuses for photovoltaic systems there is an added problem as a consequence of working at a higher voltage, where the normal working voltage of the blade fuses for low voltage is usually 500 V of alternating voltage, and in the case of fuses for photovoltaic applications it is usually 1000-1500 V of direct voltage. Said problem results from the fact that the insulation distances that must be respected in these cases are greater than they are in the case of conventional fuses, so additional protection not only of the already installed fuse, which is more or less achieved with the individual protective elements, but rather of the fuse during mounting is required. It must further be pointed out that the action of breaking the arc during fusion of the fuse element is more severe in direct voltage than in alternating voltage.

### Description of the Invention

The invention relates to a fuse block base according to claim 1. Preferred embodiments of the fuse block base are defined in the dependent claims.

The fuse block base of the invention can preferably be used with fuses with blade-type contacts, both with low-voltage fuses with blade-type contacts and with fuses for photovoltaic applications with blade-type contacts, where the latter are considerably larger than the former.

The base of the invention is particularly advantageous for photovoltaic applications given that said applications require longer fuses than conventional fuses, for which reason higher safety conditions are further required.

The fuse block base of the invention is configured for receiving and housing at least one fuse. The fuse block base comprises a lower casing and at least one upper body. It is common in the sector to refer to the lower casing as a socket. According to a preferred embodiment of the invention, the base is a two-pole base, i.e., it can house two fuses, however it is likewise contemplated that the base is a one-pole base, for example for photovoltaic applications.

In any case, each upper body can be coupled to the lower casing such that it is each of said upper bodies which are open in the upper portion that houses a fuse. A covered or protected fuse block base is therefore achieved in which all the electrically active parts are covered by insulating material, and once each fuse is installed in each base it is further insulated from the adjacent bases by the side walls that each upper body has, i.e., the upper bodies are formed as an element that laterally encloses and insulates each fuse in its working position, so base protection conditions therefore increase. In turn, the lower casing incorporates at least two fixing points, where each fixing point is connected to a fuse contact.

As in the fuse block bases of the state of the art, each pair of fuse contacts is configured for receiving and being electrically connected with a fuse, such that for each fuse a first fuse contact can be connected with a bar of the low-voltage switchboard busbar by means of a first conductive element conducting electric current comprised in the fuse block base. A second fuse contact can also be connected with a conductive connecting element by means of a second conductive element conducting electric current which is also comprised in the fuse block base. Obviously the upper body has openings which allow the electrical contacts of each fuse housed in said upper body to contact the fuse contacts for electrical connection.

According to the invention, the fuse block base comprises at least one fuse block cover which can cover the upper portion and fit in said at least one upper body. Each fuse block cover comprises coupling means for coupling with the upper body such that once the fuse block cover is decoupled, with the fuse secured thereto by its inner part by means of retaining elements, access to the fuse is allowed quickly and simply, for example to replace it, whereby each fuse is electrically connected to and/or disconnected from the lower casing, all this simply by means of manipulating each fuse block cover.

It is further contemplated that each fuse block cover incorporates retaining elements which can be mechanically fitted manually in T-shaped pivots which the fuse can incorporate in the upper portion, such that the fuse can thus be coupled to the fuse block cover, whereby the fuse is placed in and removed from the fuse block base by means of manipulating the fuse block cover, with the dual function of keeping the fuse protected once it is placed in the base, and protecting the operator while placing the fuse. In other words, the fuse block cover therefore acts like a fuse installation tool, without needing any additional tool for placing the fuse in the fuse block base. The operator uses the cover to introduce the fuse, without needing an additional tool, and leaves said cover installed because it cannot be removed if it is not removed together with the fuse, therefore the arrangement of the cover, which acts like a protective element, does not depend on human factors, such as the operators having enough time or remembering to put it in because the fuse is protected by merely being installed. In the case of the invention it is mandatory to place the protective element, i.e. the cover, to leave the fuse in place, otherwise it is not left in its place, so it cannot be forgotten.

With respect to the fuse block bases with individual protective elements, in the base of the invention, the protection is complete, including frontal protection, when the base is in the vertical arrangement, which is common.

For the particular case of fuses for photovoltaic systems, the base of the invention provides additional protection to the fuse during mounting. In other words, the individual protective elements of the state of the art discussed above cover the fuse once it is installed. However, in the case of the invention the cover protects during the installation of the fuse, i.e., it also protects when the fuse is being introduced in the contact, which is already live, even when the fuse is approaching and an arc may form due to the high voltage. Advantageous and vitally important protection is therefore achieved during the installation.

In the preferred case of a two-pole base, the fuse block base comprises four contacts or housings for fuses. According to said preferred embodiment, each fuse block cover has protective side walls and a handle which allows a simple manipulation, without needing to have a special tool for manipulating the fuses.

### Brief Description Drawings

To complement the description that is being made and for the purpose of aiding to better understand the features of the invention according to a preferred practical embodiment thereof, a set of drawings is attached as an integral part of said description where the following has been depicted with an illustrative and nonlimiting character:
Figure 1 shows a perspective view of a two-pole base according to the invention, depicted with the fuse block covers in place, two bars of the low-voltage switchboard busbar being depicted with a dashed line.
Figure 2 shows an exploded perspective view of all the elements comprised in a preferred embodiment of the base of the invention, including the alternative represented by the arrangement of a continuous protective cover common to all the upper bodies instead of one fuse block cover for each upper body.
Figure 3 shows an embodiment variant of the fuse block base depicted in Figure 1, comprising a protective cover in replacement of the two fuse block covers placed in the two upper bodies.
Figure 4 shows a perspective view of the two-pole base depicted in any of the preceding figures, where neither the fuse block covers, or protective cover, nor the upper bodies are depicted, so two fuses placed in the fuse contacts that are fixed to the lower casing can be seen.
Figure 5 shows a perspective view of a fuse block cover comprised in the base of the invention, in which the transparent element is depicted, said transparent element being configured as a central sub-cover removed from the actual fuse block cover, the fixing clips and elements also being depicted, which allows partial visual access to the fuse without having to remove the fuse block cover from the upper body.
Figure 6 shows a perspective view of the inside of a fuse block cover, where the retaining elements are mounted in the fuse block cover by means of clips, being internally accessible for coupling a fuse.
Figure 7 shows a perspective view like that of Figure 5, but in this case of one of the upper bodies of the base of the invention.

### Preferred Embodiment of the Invention

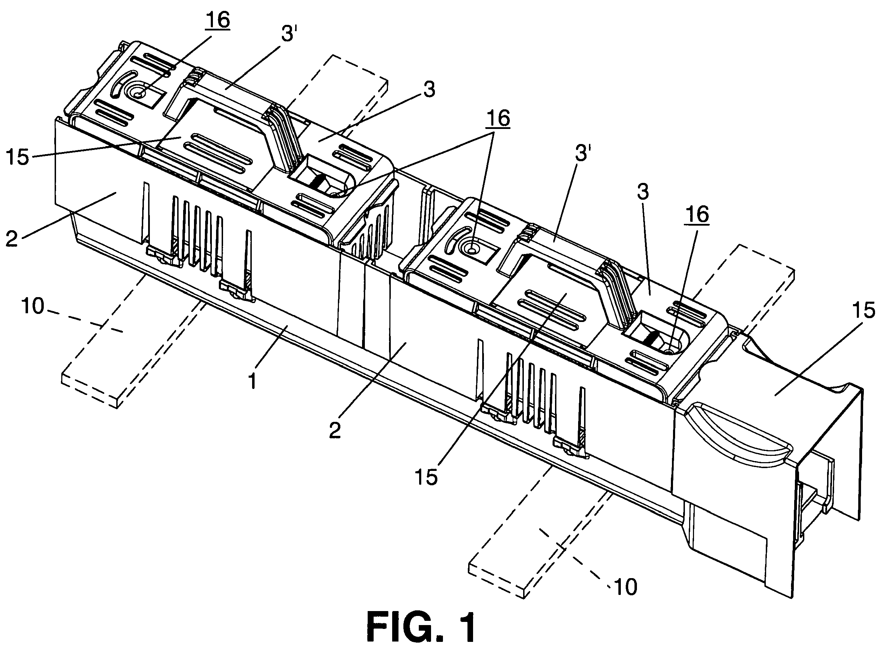

In view of Figures 1 to 4, a preferred embodiment of the invention consisting of a two-pole fuse block base comprising two pairs of fuse contacts (6, 6') can be observed, each pair of fuse contacts (6, 6') being electrically connected to a conductive strip or bar (10) of the low-voltage switchboard busbar of the corresponding electrical installation. There is one pair of fuse contacts (6, 6') for each electrical phase. A fuse (4) is coupled in each pair of fuse contacts (6, 6').

In the case of the invention, as seen in the drawings, the fuse block base is envisaged for receiving and housing at least one fuse (4), according to the depicted embodiment it is envisaged for housing two fuses (4). The fuse block base comprises a lower casing (1) and at least one upper body (2), where each upper body (2) can be coupled to the lower casing (1) and can house a fuse (4), such that the base comprises as many upper bodies (2) as fuses (4) it will house. Each upper body (2) is preferably open in the upper portion.

In turn, the lower casing (1) comprises at least two fixing points (5), such that a fuse contact (6, 6') is fixed in each fixing point (5). In the case of the preferred embodiment, the base comprises four fixing points (5), such that each pair of fuse contacts (6, 6') is configured for being connected to and receiving a fuse (4).

To that end, the base comprises a first conductive element (7) which can connect a first fuse contact (6) with a bar (10) of a low-voltage switchboard busbar. The base also comprises a second conductive element (8) which can connect a second fuse contact (6') with a connection terminal (9).

Therefore according to the invention, the fuse block base comprises at least one fuse block cover (3) comprising coupling means for being coupled to an upper body (2), such that when said fuse block cover (3) is coupled to an upper body (2), said upper body (2) is covered by the fuse block cover (3), whereas when said fuse block cover (3) is disconnected from the upper body (2), it allows access to the inside of said upper body (2), allowing the manipulation of a fuse (4) housed in said fuse block cover (3).

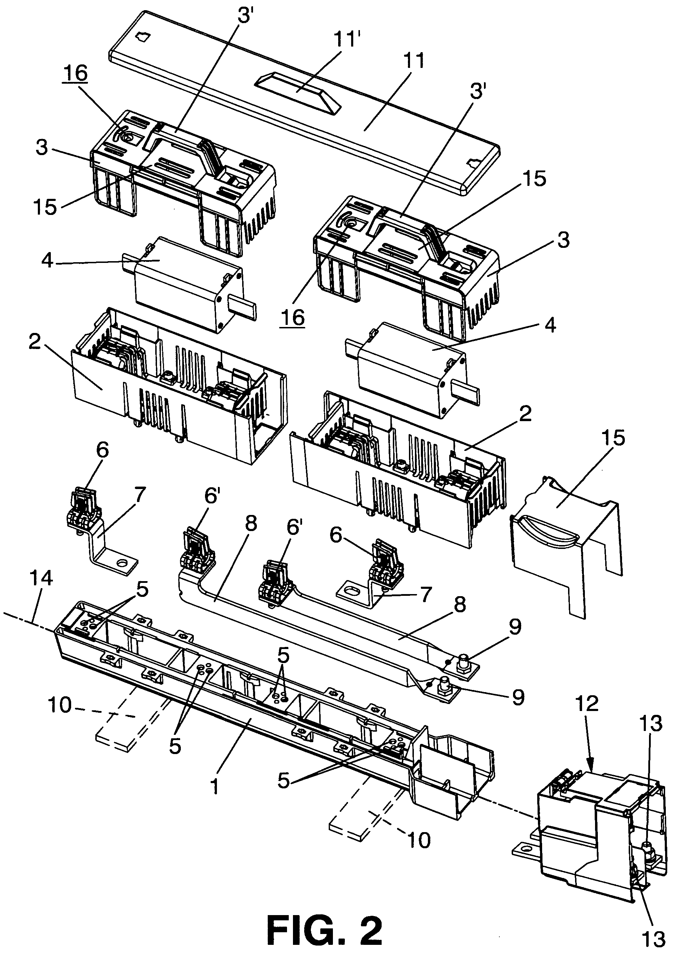

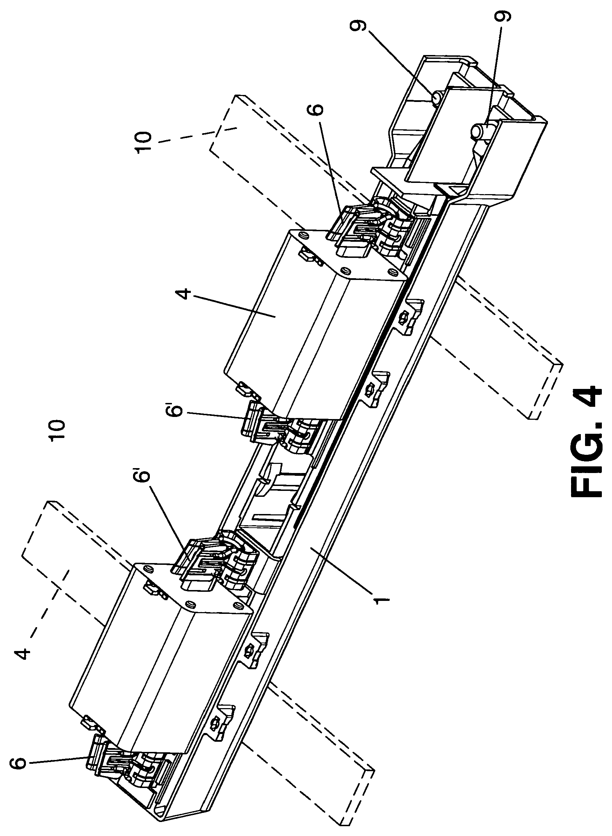

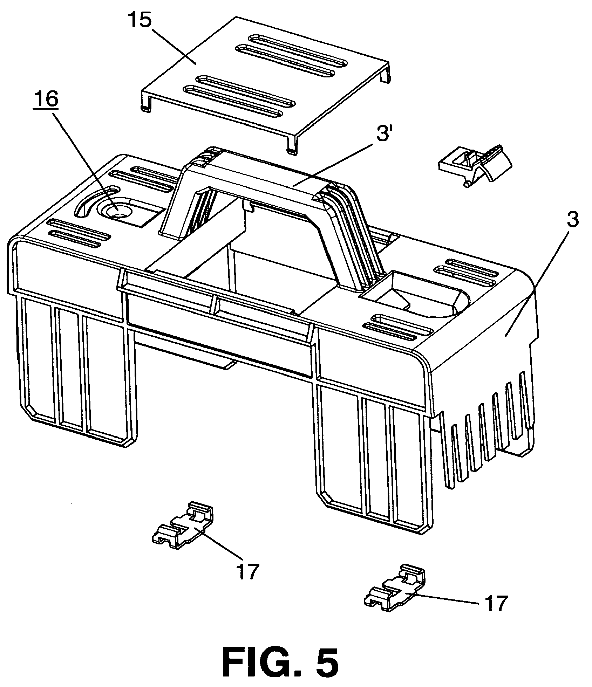

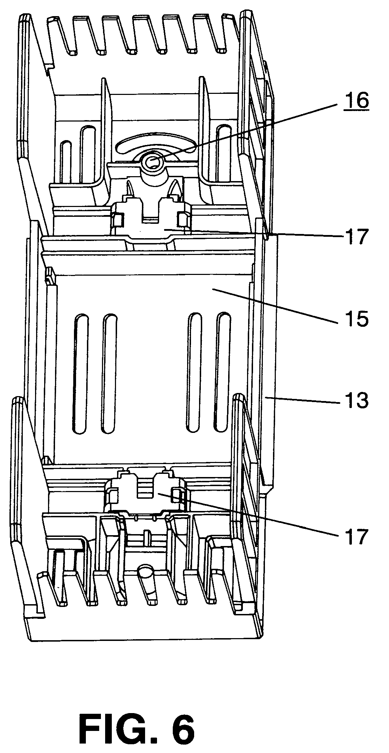

Each fuse block cover (3) also incorporates retaining elements (17), as can be seen in Figure 5, where they are shown in an exploded view, and in Figure 6, where they are shown as being fixed to the cover (3) by clips, for example, where said retaining elements (17) can be mechanically fitted manually in T-shaped pivots which each fuse (4) can incorporate in the upper portion, as seen in Figures 2 and 4, such that the fuse (4) can thus be coupled to the fuse block cover (3), whereby the fuse (4) is placed in and removed from the fuse block base by means of manipulating the fuse block cover (3), with the dual function of keeping the fuse (4) protected once it is placed in the base, and protecting the operator while placing the fuse (4).

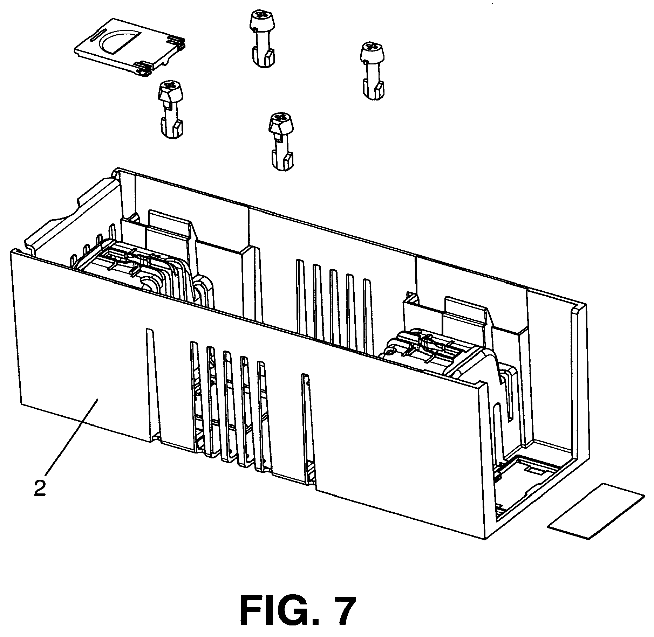

As can be seen in Figures 2 and 7, in the embodiment shown the coupling means between the fuse block cover (3) and the upper body (2) consist of housings internally incorporated by the upper body (2), specifically in correspondence with its sides, such that the fuse block cover (3) also incorporates prolongations at its sides which can be formed from its own side walls, being suitable in size for being snap fitted in the housings of the upper bodies (2).

Alternative quick coupling means are also contemplated for the function described in the preceding paragraph anterior, said means including the use of means of clips or flanges. As can be inferred from the foregoing, obviously all the elements that are not intended for electrical conduction, such as the lower casing (1), the upper bodies (2) or the fuse block covers (3), are manufactured using an electrically insulating material, such as plastic, for example, so the elasticity of these materials collaborates in the snap coupling effect described above.

In turn, each side body (2) comprises two facing side walls, the planes of which are parallel to a longitudinal axis (14) of the fuse block base, such that the aforementioned enclosure is thus obtained.

In view of Figure 2, it can be seen that when the fuse block base is a two-pole base, it comprises two upper bodies (2), two fuse block covers (3), such that the lower casing (1) comprises four fixing points (5) fixed to four fuse contacts (6, 6'), such that each pair of fuse contacts (6, 6') can be connected to a fuse (4).

The possibility that at least one upper body (2) comprises an arcing chamber is also contemplated.

One of the main advantages of the invention is how simply and quickly the fuse block cover (3) can be removed, so the fuse secured to said fuse block cover (3) on its inner part by means of retaining elements (17) can thus be accessed for replacement or inspection, to that end each fuse block cover (3) can be coupled to and decoupled from an upper body (2) according to a direction perpendicular to a longitudinal axis (14) of the fuse block base.

It is contemplated that at least one fuse block cover (3) has a cavity that allows viewing a fuse (4) housed in said cover (3), i.e., it allows viewing the inside of the upper body (2) when said cover (3) is coupled to an upper body (2). It can therefore be determined whether the fuse (4) is burned out and should be replaced, which can be done without having to take the fuse out of its service position by means of a visual inspection through said cavity.

As seen in Figure 5 and to a lesser extent in Figures 1 and 2, at least one fuse block cover (3) also comprises a transparent element (15) which can be integrated in the fuse block cover (3) itself, although this option is not depicted, or it can be coupled to the cavity of the fuse block cover (3) mentioned in the preceding paragraph, such that once the fuse block cover (3) is coupled to the upper body (2), the transparent element (15) allows seeing the inside of said upper body (2), in addition to preventing any element from entering through the cavity.

In this same sense, to give the fuse block cover (3) greater functionality, it is contemplated that it comprises a handle (3') in the upper portion in order to manipulate it better.

At least one fuse block cover (3) also comprises a sunken cone-shaped measurement opening (16) which allows taking a voltage measurement of any of the fuse contacts (6) when said fuse block cover (3) is coupled to an upper body (2) without having to remove said cover.

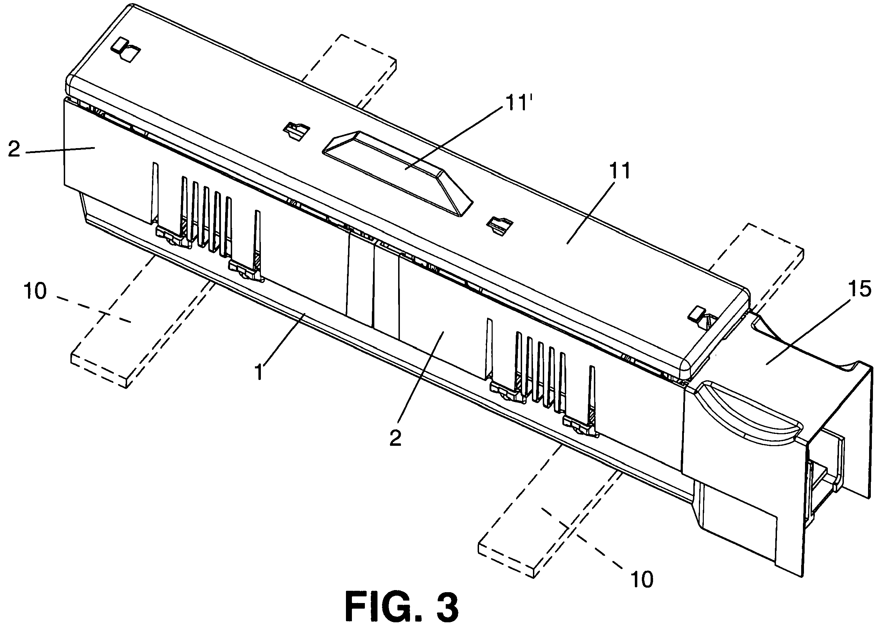

It is also contemplated that at least one fuse block cover (3) comprises a protective side wall, which can consist of two independent walls between which a central cavity is located, as depicted in the drawings, particularly in Figures 2 and 3, or it can consist of a continuous protective side wall, i.e., where the central cavity of the wall of the cover (3) depicted in said Figures 2 and 3 is eliminated. Better protection in manipulating the fuses is obtained in either of the two cases.

According to a preferred embodiment, the connection conductor (9) consists of two connection terminals (9).

Any of the conductive elements (7, 8) can consist of a flat bar or strip obtained as a single metal part.

As depicted in Figure 3, as an alternative to placing a fuse block cover (3) on each upper body (2), it is contemplated that the base comprises a protective cover (11) which can be coupled continuously to the upper bodies (2) in the upper portion.

It is also contemplated that the base comprises a measurement module (12) connected to the connection terminals (9), where said measurement module (12) in turn comprises its own connector terminals (13) of the measurement module (12), which can obviously be of the same type as the connection terminals (9) of the fuse block base or of a different type.

In view of this description and set of drawings, the person skilled in the art will understand that the embodiments of the invention that have been described can be combined in many ways within the object of the invention.

## Claims

1. Fuse block base for receiving and housing at least one fuse (4), where said fuse block base comprises a lower casing (1) and at least one upper body (2), where each upper body (2) can be coupled to the lower casing (1) and can house a fuse (4), the lower casing (1) comprising at least two fixing points (5), such that a fuse contact (6, 6') is fixed in each fixing point (5), said at least two fuse contacts (6, 6') being configured for being connected to and receiving a fuse (4), such that the base comprises a first conductive element (7) which can connect a first fuse contact (6) with a bar (10) of a busbar, and the base comprises a second conductive element (8) which can connect a second fuse contact (6') with a connection terminal (9),the fuse block base comprising at least one fuse block cover (3) comprising coupling means for being coupled to an upper body (2), such that when said at least one fuse block cover (3) is coupled to an upper body (2), said upper body (2) is at least partially covered by the fuse block cover (3), whereas when said fuse block cover (3) is disconnected from the upper body (2), it allows access to the inside of said upper body (2),
**characterized in that**
each fuse block cover (3) incorporates retaining elements (17) fixed to the fuse block cover (3), where said retaining elements (17) can be mechanically fitted in T-shaped pivots which each fuse (4) can incorporate in the upper portion, such that the fuse (4) can thus be placed on and removed from the fuse block base by means of manipulating the fuse block cover (3).

2. Fuse block base according to claim 1, wherein each upper body (2) comprises two facing side walls, the planes of which are parallel to a longitudinal axis (14) of the fuse block base.

3. Fuse block base according to any of the preceding claims, wherein the fuse block base is a two-pole base comprising two upper bodies (2), two fuse block covers (3), such that the lower casing (1) comprises four fixing points (5) fixed to four fuse contacts (6, 6'), such that each pair of fuse contacts (6, 6') can be connected to a fuse (4).

4. Fuse block base according to any of the preceding claims, wherein at least one upper body (2) comprises an arcing chamber.

5. Fuse block base according to any of the preceding claims, wherein each fuse block cover (3) can be coupled to and decoupled from an upper body (2) according to a direction perpendicular to a longitudinal axis (14) of the fuse block base.

6. Fuse block base according to any of the preceding claims, wherein at least one fuse block cover (3) comprises a cavity which allows seeing the inside of the upper body (2) when said fuse block cover (3) is coupled to said upper body (2).

7. Fuse block base according to claim 6, wherein at least one fuse block cover (3) comprises a transparent element (15) which can be coupled to the cavity of the fuse block cover (3), such that once the fuse block cover (3) is coupled to the upper body (2), the transparent element (15) allows seeing the inside of said upper body (2).

8. Fuse block base according to any of the preceding claims, wherein at least one fuse block cover (3) comprises a measurement opening (16) which allows taking a voltage measurement of any of the fuse contacts (6) when said fuse block cover (3) is coupled to an upper body (2).

9. Fuse block base according to any of the preceding claims, wherein at least one fuse block cover (3) comprises a protective side wall.

## Patentansprüche

1. Sicherungsblockbasis für die Aufnahme und Behausung mindestens einer Sicherung (4), wobei die Sicherungsblockbasis ein unteres Gehäuse (1) und mindestens einen oberen Körper (2) enthält, wobei jeder obere Körper (2) mit dem unteren Gehäuse (1) koppelbar ist und eine Sicherung (4) behausen kann, wobei das untere Gehäuse (1) mindestens zwei Befestigungspunkte (5) aufweist, so dass ein Sicherungskontakt (6, 6') in jedem Befestigungspunkt (5) befestigt ist, wobei die besagten mindestens zwei Sicherungskontakte (6, 6') zur Befestigung an und zur Aufnahme einer Sicherung (4) konfiguriert sind, so dass die Basis ein erstes leitendes Element (7) enthält, das einen ersten Sicherungskontakt (6) mit einem Block (10) einer Sammelschiene verbinden kann, und die Basis ein zweites leitendes Element (8) enthält, das einen zweiten Sicherungskontakt (6') mit einer Anschlussklemme (9) verbinden kann, wobei die Sicherungsblockbasis mindestens eine Sicherungsblockabdeckung (3) aufweist, die Verbindungsmittel zur Verbindung mit einem oberen Körper (2) enthält, so dass, wenn die besagte mindestens eine Sicherungsblockabdeckung (3) mit einem oberen Körper (2) verbunden ist, der besagte obere Körper (2) zumindest teilweise von der Sicherungsblockabdeckung (3) bedeckt ist, während, wenn die Sicherungsblockabdeckung (3) vom oberen Körper (2) getrennt wird, der Zugang zum Inneren des besagten oberen Körpers (2) ermöglicht wird,
**dadurch gekennzeichnet, dass** jede Sicherungsblockabdeckung (3) Halteelemente (17) enthält, die an der Sicherungsblockabdeckung (3) befestigt sind, wobei die Halteelemente (17) mechanisch in T-förmigen Zapfen montiert werden können, die jede Sicherung (4) im oberen Bereich enthalten kann, so dass die Sicherung (4) somit auf der Sicherungsblockbasis mit Mitteln zur Manipulation des Sicherungsblockdeckel (3) platziert und entfernt werden kann.

2. Sicherungsblockbasis nach Anspruch 1,
**dadurch gekennzeichnet, dass** jeder obere Körper (2) zwei einander zugewandte Seitenwände aufweist, deren Ebenen parallel zu einer Längsachse (14) der Sicherungsblocksbasis sind.

3. Sicherungsblockbasis nach einem der vorhergehenden Ansprüche,
**dadurch gekennzeichnet, dass** die Sicherungsblockbasis eine zweipolige Basis ist, die zwei obere Körper (2) und zwei Sicherungsblockabdeckungen (3) enthält, so dass das untere Gehäuse (1) vier Befestigungspunkte (5) enthält, die mit vier Sicherungskontakten (6, 6') befestigt sind, so dass jedes Paar von Sicherungskontakten (6, 6') mit einer Sicherung (4) verbunden werden kann.

4. Sicherungsblockbasis nach einem der vorhergehenden Ansprüche,
**dadurch gekennzeichnet, dass** mindestens ein oberer Körper (2) eine Lichtbogenkammer enthält.

5. Sicherungsblockbasis nach einem der vorhergehenden Ansprüche,
**dadurch gekennzeichnet, dass** jede Sicherungsblockabdeckung (3) mit einem oberen Körper (2) verbunden und entkoppelt werden kann gemäß einer Richtung senkrecht zu einer Längsachse (14) der Sicherungsblockbasis.

6. Sicherungsblockbasis nach einem der vorhergehenden Ansprüche,
**dadurch gekennzeichnet, dass** mindestens eine Sicherungsblockabdeckung (3) einen Hohlraum enthält, der es erlaubt, das Innere des oberen Körpers (2) zu sehen, wenn die Sicherungsblockabdeckung (3) mit dem oberen Körper (2) verbunden ist.

7. Sicherungsblockbasis nach Anspruch 6,
**dadurch gekennzeichnet, dass** mindestens eine Sicherungsblockabdeckung (3) ein transparentes Element (15) enthält, das mit dem Hohlraum der Sicherungsblockabdeckung (3) verbunden werden kann, so dass, sobald die Sicherungsblockabdeckung (3) mit dem oberen Körper (2) verbunden ist, das transparente Element (15) es ermöglicht, das Innere des besagten oberen Körpers (2) zu sehen.

8. Sicherungblockbasis nach einem der vorhergehenden Ansprüche,
**dadurch gekennzeichnet, dass** mindestens eine Sicherungsblockabdeckung (3) eine Messöffnung (16) aufweist, die eine Spannungsmessung einer der Sicherungskontakte (6) ermöglicht, wenn die Sicherungsblockabdeckung (3) mit einem oberen Körper (2) verbunden ist.

9. Sicherungsblockbasis nach einem der vorhergehenden Ansprüche,
**dadurch gekennzeichnet, dass** mindestens eine Sicherungsblockabdeckung (3) eine Schutzseitenwand aufweist.

## Revendications

1. Base de bloc de fusible destinée à recevoir et à loger au moins un fusible (4), cette base de bloc de fusible comprenant un caisson inférieur (1) et au moins un corps supérieur (2), chacun des corps supérieurs (2) pouvant être accouplé au caisson inférieur (1) et pouvant loger un fusible (4), le caisson inférieur (1) comprenant au moins deux points de fixation (5) de sorte qu'un contact de fusible (6, 6') soit fixé dans chacun des points de fixation (5), les contacts de fusible (6, 6') étant réalisés pour pouvoir être connectés à et recevoir un fusible (4), de sorte que la base comprenne un premier élément conducteur (7) pouvant connecter un premier contact de fusible (6) avec une barre (10) d'un système de barre omnibus et la base comprenant un second élément conducteur (8) pouvant connecter un second contact de fusible (6') avec une borne de connexion (9), la base de bloc de fusible comprenant au moins un couvercle de bloc de fusible (3) comportant des moyens d'accouplement destinés à être accouplés au corps supérieur (2) de sorte que lorsque le couvercle de bloc de fusible (3) est accouplé au corps supérieur (2), ce corps supérieur (2) est au moins partiellement recouvert par le couvercle de bloc de fusible (3) alors que lorsque le couvercle de bloc de fusible (3) est déconnecté du corps supérieur (2) il permet l'accès à la partie interne du corps supérieur (2),
**caractérisé en ce que**
chacun des couvercles de bloc de fusible (3) comprend des éléments de retenue (17) fixés à ce couvercle de bloc de fusibles (3), ces éléments de retenue (17) pouvant être montés mécaniquement dans des pivots en forme de T que chaque fusible (4) peut intégrer dans la partie supérieure de sorte que le fusible (4) puisse ainsi être placé sur et extrait de la base de bloc de fusible par manipulation du couvercle de bloc de fusible (3).

2. Base de bloc de fusible conforme à la revendication 1,
dans laquelle chaque corps supérieur (2) comprend deux parois latérales situées en regard dont les plans sont parallèles à l'axe longitudinal (14) de la base de bloc de fusible.

3. Base de bloc de fusible conforme à l'une quelconque des revendications précédentes,
dans laquelle la base de bloc de fusible est une base bipolaire comprenant deux corps supérieurs (2), et deux couvercles de bloc de fusible (3) de sorte que le caisson inférieur (1) comprenne quatre points de fixation (5) fixés à quatre contacts de fusible (6, 6') pour que chaque paire de contacts de fusible (6, 6') puisse être connectée à un fusible (4).

4. Base de bloc de fusible conforme à l'une quelconque des revendications précédentes,
dans laquelle au moins un corps supérieur (2) comprend une chambre de formation d'arc.

5. Base de bloc de fusible conforme à l'une quelconque des revendications précédentes,
dans laquelle chaque couvercle de bloc de fusible (3) peut être accouplé à un corps supérieur (2) ou découplé de celui-ci selon une direction perpendiculaire à l'axe longitudinal (14) de la base de bloc de fusible.

6. Base de bloc de fusible conforme à l'une quelconque des revendications précédentes,
dans laquelle au moins un couvercle de bloc de fusible (3) comprend une cavité qui permet de voir la partie interne du corps supérieur (2) lorsque le couvercle de bloc de fusible (3) est accouplé au corps supérieur (2).

7. Base de bloc de fusible conforme à la revendication 6,
dans laquelle au moins un couvercle de bloc de fusible (3) comprend un élément transparent (15) qui peut être accouplé à la cavité du couvercle de bloc de fusible (3) de sorte que, lorsque le couvercle de bloc de fusible (3) est accouplé au corps supérieur (2), l'élément transparent (15) permette de voir la partie interne du corps supérieur (2).

8. Base de bloc de fusible conforme à l'une quelconque des revendications précédentes,
dans laquelle au moins un couvercle de bloc de fusible (3) comprend une ouverture de mesure (16) qui permet d'effectuer une mesure de tension de l'un des contacts de fusible (6) lorsque le couvercle de bloc de fusible (3) est accouplé à un corps supérieur (2).

9. Base de bloc de fusible conforme à l'une quelconque des revendications précédentes,
dans laquelle au moins un couvercle de bloc de fusible (3) comprend une paroi latérale de protection.
